(19) Europäisches Patentamt
European Patent Office
Office européen des brevets

(11) EP 4 726 813 A1

(12) **EUROPEAN PATENT APPLICATION**

(43) Date of publication:
**15.04.2026 Bulletin 2026/16**

(21) Application number: **25206987.7**

(22) Date of filing: **06.10.2025**

(51) International Patent Classification (IPC):
***H01M 4/62*** (2006.01) ***C08G 73/14*** (2006.01)
***C08L 77/00*** (2006.01) ***H01M 10/0525*** (2010.01)
***C08G 73/10*** (2006.01) ***C08L 79/08*** (2006.01)
***C08G 69/26*** (2006.01) ***C08G 69/32*** (2006.01)
***C08G 69/40*** (2006.01) ***C08G 69/42*** (2006.01)
***H01M 50/423*** (2021.01)

(52) Cooperative Patent Classification (CPC):
**H01M 4/622; C08G 69/265; C08G 69/32; C08G 69/40; C08G 69/42; H01M 50/423**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.10.2024 KR 20240136908**
**08.08.2025 KR 20250109553**

(71) Applicant: **Hansol Chemical Co., Ltd**
**Seoul 06169 (KR)**

(72) Inventors:
- **YOON, Nam-Sun**
**Jeonbuk-do 55321, (KR)**
- **LEE, So-Jeong**
**Jeonbuk-do 55321, (KR)**
- **KIM, Hee-Jeong**
**Jeonbuk-do 55321, (KR)**
- **AN, Su-Hyeon**
**Jeonbuk-do 55321, (KR)**
- **KIM, Kwang-In**
**Jeonbuk-do 55321, (KR)**
- **KWON, Se-Man**
**Jeonbuk-do 55321, (KR)**
- **SEONG, Hoon-Moh**
**Jeonbuk-do 55321, (KR)**

(74) Representative: **Louis Pöhlau Lohrentz**
**Patentanwälte**
**Postfach 30 55**
**90014 Nürnberg (DE)**

# (54) POLYAMIDE POLYMER FOR BINDER, AND SLURRY, ELECTRODE, SEPARATOR, AND SECONDARY BATTERY INCLUDING SAME

(57) Proposed are a polyamide polymer for a binder, which includes a first monomer unit containing an ether group, a $C_1$ to $C_{10}$ straight or branched hydrocarbon group, or a combination thereof, and a slurry, an electrode, a separator, a slurry composition for a secondary battery non-coated area insulation coating layer, and a secondary battery including the same.



Processed by Luminess, 75001 PARIS (FR)

## Description

BACKGROUND OF THE INVENTION

Field of the Invention

The present disclosure relates to a polyamide polymer for a binder, and a slurry, an electrode, a separator, a slurry composition for a secondary battery non-coated area insulation coating layer, and a secondary battery including the same.

Description of the Related Art

Lithium secondary batteries are used in a wide range of industrial fields, such as electrical, electronic, communication, and computer industries, due to their high energy density. Their application is expanding from small lithium secondary batteries for portable electronic devices to high-capacity secondary batteries for hybrid and electric vehicles.

In order to provide a lithium secondary battery with high energy density and excellent life characteristics, it is desirable to increase the amounts of an electrode active material and a conductive agent within an electrode, while decreasing the amount of a binder.

However, a lower binder amount generally leads to a reduction in dispersibility of the electrode active material and/or conductive agent, adhesiveness, and flexibility of the electrode active material layer. Therefore, the electrode active material may be separated from a current collector during charging and discharging, which may result in a deterioration in cycle characteristics.

To address this, it is required for the binder to ensure dispersibility of the electrode active material and/or conductive agent within the electrode, electrode plate adhesiveness, and electrode plate flexibility even with a small amount.

For example, a fluorine-based binder, such as polyvinylidene fluoride (PVDF) containing no polar group, undergoes minimal swelling in an organic electrolyte solution, which helps maintain an electrode structure during battery operation and allows for better dispersibility of active materials.

However, PVDF has known drawbacks including poor conductive agent dispersibility and weak electrode plate adhesiveness and flexibility. In particular, long-term exposure to basic conditions causes PVDF to degrade, leading to release of HF gas, which poses the problem of deteriorating stability.

Additionally, a non-fluorine-based binder, such as hydrogenated acrylonitrile-butadiene binder, offers improved conductive agent dispersibility and electrode plate flexibility compared to fluorine-based binders, but still has limitations, particularly in achieving sufficient adhesiveness.

Accordingly, there is a need for a binder capable of overcoming the problems of the related art, ensuring improved adhesiveness and flexibility at the same time, and providing excellent stability to improve lifespan characteristics of lithium secondary batteries.

Documents of Related Art

(Patent document 1) Korean Patent Application Publication No. 10-2016-0040125

SUMMARY OF THE INVENTION

Accordingly, the present disclosure has been made keeping in mind the above problems occurring in the related art, and one objective of the present disclosure is to provide a polyamide polymer for an electrode binder, in which a polyamide polymer for a binder including a first monomer unit containing an ether group, a $C_1$ to $C_{10}$ straight or branched hydrocarbon group, or a combination thereof is applied to a conventional binder including an polyamide polymer. This configuration enhances adhesiveness characteristics, thereby preventing electrode delamination caused by lithium-ion movement and improving the electrochemical and cycle characteristics of a secondary battery.

Furthermore, another objective of the present disclosure is to provide a binder that improves the charge/-discharge efficiency and lifespan of a secondary battery.

Furthermore, another objective of the present disclosure is to provide a slurry composition using the polyamide polymer for the electrode binder, thereby improving the characteristics of a secondary battery.

Furthermore, another objective of the present disclosure is to provide a high-performance electrode and separator to which the slurry composition is applied, and a low-cost and high-performance secondary battery including the same.

The objectives of the present disclosure are not limited to those mentioned above, and other objectives not

mentioned will be clearly understood by those skilled in the art from the description provided hereinafter.

In order to achieve the above objectives, according to one aspect of the present disclosure, there is provided a polyamide polymer, including: a first monomer unit containing an ether group, a $C_1$ to $C_{10}$ straight or branched hydrocarbon group, or a combination thereof.

According to another aspect of the present disclosure, there is provided a binder, including: the polyamide polymer.

According to another aspect of the present disclosure, there is provided a slurry, including: the binder; and an electrode active material.

According to another aspect of the present disclosure, there is provided an electrode, including: a current collector; and an electrode active material layer, a non-coated area insulation coating layer, or a combination thereof, which is formed on the current collector and includes the binder.

According to another aspect of the present disclosure, there is provided a separator, including: a porous substrate coated with a slurry composition including the binder.

According to another aspect of the present disclosure, there is provided a slurry composition for a secondary battery non-coated area insulation coating layer, the slurry composition including: the binder.

According to another aspect of the present disclosure, there is provided a secondary battery, including: the binder.

The binder of the present disclosure exhibits excellent adhesiveness characteristics, thereby enhancing the electrochemical characteristics of the secondary battery. It can also improve the cycle stability of the secondary battery by facilitating lithium-ion mobility and reducing DC-IR.

Furthermore, the binder of the present disclosure can improve the charge/discharge efficiency and lifespan of the secondary battery.

Furthermore, the enhanced adhesiveness of the electrode binder of the present disclosure allows for an increase in the amounts of an active material and a conductive agent while reducing the amount of the binder. Thus, it is possible to provide a low-cost, high-energy-density lithium secondary battery.

DETAILED DESCRIPTION OF THE INVENTION

Hereinafter, the operation and effect of the present disclosure will be described in more detail through specific embodiments of the present disclosure. However, these embodiments are provided only for illustrative purposes and not intended for limiting the scope of the present disclosure.

All terms or words used in the specification and claims have the same meaning as commonly understood by one of ordinary skill in the art to which inventive concepts belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Therefore, embodiments disclosed herein are merely preferred examples of the present disclosure and do not fully describe the technical idea of the present disclosure, so it will be appreciated that there can be various equivalents and alterations thereto at a filing date of the present application.

As used herein, the singular forms are intended to include the plural forms as well, unless the context clearly indicates otherwise. It will be further understood that the terms "comprise", "include", "have", etc., when used in this specification, specify the presence of stated features, integers, steps, operations, elements, components, and/or combinations thereof but do not preclude the presence or addition of one or more other features, integers, steps, operations, elements, components, and/or combinations thereof.

In this specification, "a to b" and "a~b" indicating a numerical range are defined as $\geq$ a and $\leq$ b.

A polyamide polymer according to one aspect of the present disclosure may include a first monomer unit containing an ether group, a $C_1$ to $C_{10}$ straight or branched hydrocarbon group, or a combination thereof.

In one embodiment, the first monomer unit may include a structure represented by the following Formula 1, which includes two aromatic rings connected to each other by the $C_1$ to $C_{10}$ straight or branched hydrocarbon.

[Formula 1]

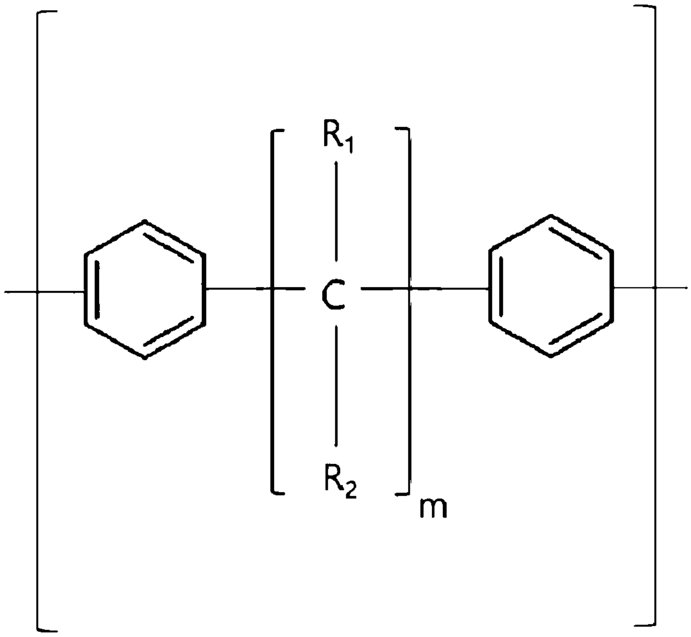

In Formula 1 above,

$R_1$ and $R_2$ may each independently hydrogen; or a $C_1$ to $C_4$ straight or branched hydrocarbon, and
m may be 1 to 4.

For example, $R_1$ and $R_2$ may each independently be hydrogen, methyl, ethyl, propyl, isopropyl, butyl, isobutyl, tert-butyl, sec-butyl, or a combination thereof.

In one embodiment, the first monomer unit may be formed by polymerization of a first monomer represented by the following Formula 2.

[Formula 2]

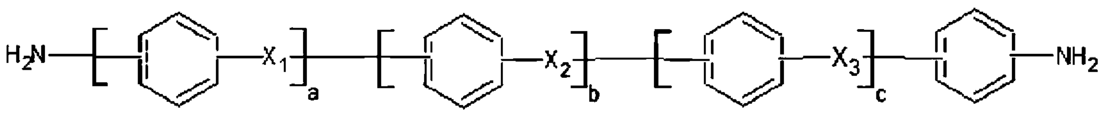

In Formula 2 above,

a+b+c may be 1 to 10, and
$X_1$, $X_2$, and $X_3$ may each independently be an oxygen atom; or a $C_1$ to $C_{10}$ straight or branched hydrocarbon.

For example, $X_1$, $X_2$, and $X_3$ may each independently be an ether group (-O-), a $C_1$ to $C_{10}$ straight or branched hydrocarbon connecting two aromatic rings of Formula 1 above, or a combination thereof.

In one embodiment, the first monomer may be 4,4'-oxydianiline (ODA), 3,4'-methylenedianilne (3,4'-MDA), 1,3-bis(3-aminophenoxy)benzene (APB), 1,4-bis(4-aminophenoxy)benzene, 1,3-bis(4-aminophenoxy)benzene, 1,3-bis [2-(4-aminophenyl)-2-propyl]benzene, 4,4'-diaminodiphenylmethane, 4,4'-diaminodiphenylethane, 4,4'-isopropylidene-bis[(4-aminophenoxy)benzene], 4,4'-(1,4-phenylenediisopropylidene)bisaniline, or a combination thereof.

In one embodiment, the polyamide polymer may further include a second monomer unit containing at least one aromatic ring.

The at least one aromatic ring may be used to form a part of a backbone of the polyamide polymer. That is, the polyamide polymer may include an aromatic ring in the backbone.

The monomer unit containing the at least one aromatic ring needs to be polymerized with a diamine monomer to produce a polyamide polymer, and may include a substituent that enables such polymerization.

In one embodiment, the polyamide polymer may further include a third monomer unit containing a sulfone, a fourth monomer unit containing a carboxylic acid, or a combination thereof.

The third monomer unit containing the sulfone may also include an aromatic ring. The sulfone or sulfone and aromatic ring of the third monomer unit containing the sulfone may be used to form a part of the backbone of the polyamide polymer. That is, the polyamide polymer may include a sulfone or a sulfone and an aromatic ring in the backbone.

The third monomer unit containing the sulfone may contribute to improving adhesiveness characteristics of the polyamide polymer. Furthermore, it may greatly contribute to improving battery characteristics.

Additionally, the third monomer unit containing the sulfone may also contribute to improving the initial efficiency of a battery.

The fourth monomer unit containing the carboxylic acid may include one or more carboxylic acids, and the carboxylic acid may be a substituent on an aromatic ring.

The fourth monomer unit containing the carboxylic acid, when used in an appropriate amount, may improve battery performance while enhancing the adhesiveness of the polyamide polymer.

In one embodiment, the polyamide polymer may be formed by polymerization of bis[4-(4-aminophenoxy)phenyl] sulfone (BAPS), 4,4'-oxydianiline (ODA), isophthaloyl chloride (IPC), and terephthaloyl chloride (TPC).

In one embodiment, the polyamide polymer may be formed by polymerization of bis[4-(4-aminophenoxy)phenyl] sulfone (BAPS), 3,4'-methylenedianilne (3,4'-MDA), isophthaloyl chloride (IPC), and terephthaloyl chloride (TPC).

In one embodiment, the polyamide polymer may be formed by polymerization of bis[4-(4-aminophenoxy)phenyl] sulfone (BAPS), 1,3-bis(3-aminophenoxy)benzene (APB), isophthaloyl chloride (IPC), and terephthaloyl chloride (TPC).

In one embodiment, the second monomer that forms the second monomer unit containing the at least one aromatic ring through polymerization may be a terephthaloyl chloride monomer, an isophthaloyl chloride monomer, a phthalic acid monomer, an isophthalic acid monomer, a terephthalic acid monomer, or a combination thereof.

In one embodiment, the molar ratio of the terephthaloyl chloride to the isophthaloyl chloride (mol% of the terephthaloyl chloride:mol% of the isophthaloyl chloride) may be 100:0 to 0:100, based on a total of 100 mol% of the terephthaloyl chloride and the isophthaloyl chloride used in polymerization of the polyamide polymer.

For example, the molar ratio of the terephthaloyl chloride to the isophthaloyl chloride (mol% of the terephthaloyl chloride: mol% of the isophthaloyl chloride) may be 90:10 to 10:90, 80:20 to 20:80, 75:25 to 25:75, 70:30 to 30:70, 50:50 to 90:10, 50:50 to 80:20, 50:50 to 70:30, 60:40 to 75:25, 60:40 to 70:30, or 70:30.

That is, for polymerization of the polyamide polymer of the present disclosure, both the terephthaloyl chloride and the isophthaloyl chloride may be used.

In one embodiment, the third monomer that forms the third monomer unit containing the sulfone through polymerization may be bis [4-(4-aminophenoxy)phenyl] sulfone, bis(4-aminophenyl)sulfone, bis(3-aminophenyl)sulfone, 3,3'-diaminodiphenyl sulfone, 3,4'-diaminodiphenyl sulfone, 4,4'-diaminodiphenyl sulfone, 1,3-bis(3-aminophenyl sulfone)benzene, 1,3-bis(4-aminophenyl sulfone)benzene, 1,4-bis(4-aminophenyl sulfone)benzene, bis [3-(3-aminophenoxy)phenyl] sulfone, bis [3-(4-aminophenoxy)phenyl] sulfone, bis [4-(3-aminophenoxy)phenyl] sulfone, or a combination thereof.

In particular, when bis [4-(4-aminophenoxy)phenyl] sulfone is used, the adhesiveness characteristics of the polyamide polymer may be significantly improved. Additionally, the use of bis [4-(4-aminophenoxy)phenyl] sulfone in a positive electrode of a battery may greatly contribute to improving the characteristics of the battery (e.g., initial efficiency characteristics of the battery).

In one embodiment, the fourth monomer that forms the fourth monomer unit containing the carboxylic acid through polymerization may be 5,5'-methylenebis(2-aminobenzoic acid) (MBAA), 3,5-diaminobenzoic acid (DABA), or a combination thereof.

The carboxylic acid of the 5,5'-methylenebis(2-aminobenzoic acid) or the 3,5-diaminobenzoic acid may contribute to improving the adhesiveness with an aluminum current collector.

In one embodiment, the molar ratio of the third monomer unit to the first monomer unit (mol% of the third monomer unit:mol% of the first monomer unit) in the polyamide polymer may be 90:10 to 1:99, based on a total of 100 mol% of the third monomer unit and the first monomer unit.

That is, the molar ratio of the third monomer forming the third monomer unit through polymerization and the first monomer forming the first monomer unit through polymerization (mol% of the third monomer:mol% of the first monomer) may be 90:10 to 1:99.

For example, the molar ratio of the third monomer to the first monomer (mol% of the third monomer: mol% of the first monomer) may be 90:10 to 5:95, 90:10 to 10:90, 80:20 to 1:99, 80:20 to 5:95, 80:20 to 10:90, 70:30 to 10:90, or 70:30 to 20:80.

When the amount of the diamine monomer including the first monomer unit, which contains the ether group, the $C_1$ to $C_{10}$ straight or branched hydrocarbon group, or the combination thereof, exceeds the range defined herein, a lower molecular weight of the diamine monomer including the first monomer unit (which contains the ether group, the $C_1$ to $C_{10}$ straight or branched hydrocarbon group, or the combination thereof) compared to the diamine monomer including the

sulfone may limit the molecular weight increase, leading to reduced adhesiveness and degraded battery performance.

On the other hand, when the amount of the diamine monomer including the first monomer unit, which contains the ether group, the $C_1$ to $C_{10}$ straight or branched hydrocarbon group, or the combination thereof, is less than the range defined herein, adhesiveness may be reduced and battery performance may be degraded.

In one embodiment, the polyamide polymer may include a monomer repeating unit represented by the following Formula 3.

[Formula 3]

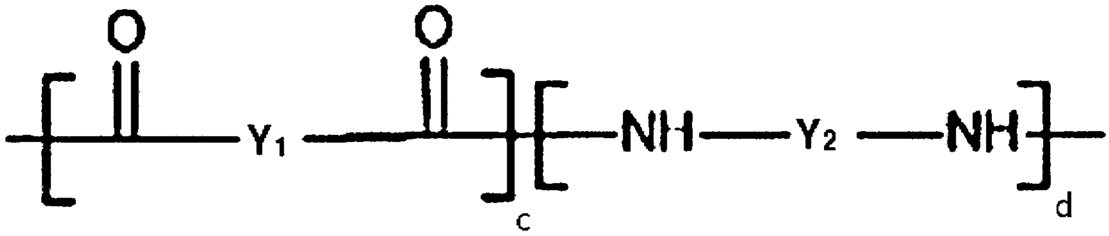

In Formula 3 above,

$Y_1$ may include at least one aromatic ring substituted with a halogen element, hydrogen, a hydroxyl group, a carboxyl group, a $C_1$ to $C_4$ straight or branched hydrocarbon group, or a combination thereof, and
$Y_2$ may include two aromatic rings connected to each other by $-SO_2-$;
an aromatic ring substituted with at least one carboxyl group;
two aromatic rings connected to each other by an oxygen atom or a $C_1$ to $C_{10}$ straight or branched hydrocarbon; or a combination thereof,
wherein the two aromatic rings connected to each other by $-SO_2-$ may be substituted with a halogen element, hydrogen, a hydroxyl group, a carboxyl group, a $C_1$ to $C_4$ straight or branched hydrocarbon group substituted or unsubstituted with a halogen element, or a combination thereof, and

$$c+d=1.$$

(wherein, the $Y_2$ must include two aromatic rings connected to each other by an oxygen atom or a $C_1$ to $C_{10}$ straight or branched hydrocarbon)
c and d in Formula 3 above represent mole fractions.

The halogen element in Formula 3 above may not include fluorine.

The monomer unit represented by $Y_1$ in Formula 3 above corresponds to a monomer unit containing at least one aromatic ring.

For example, the monomer that forms the monomer unit represented by $Y_1$ in Formula 3 above through polymerization may be a terephthaloyl chloride monomer, an isophthaloyl chloride monomer, a phthalic acid monomer, an isophthalic acid monomer, a terephthalic acid monomer, or a combination thereof.

Additionally, the monomer that forms the monomer unit represented by $Y_2$ in Formula 3 above through polymerization may be a diamine monomer that includes both a sulfone and at least one aromatic ring, a diamine monomer that includes a carboxylic acid, a diamine monomer that includes an oxygen atom, a $C_1$ to $C_{10}$ straight or branched hydrocarbon, or a combination thereof, or a combination of these monomers.

For example, the diamine monomer that includes both the sulfone and the at least one aromatic ring and forms the monomer unit represented by $Y_2$ in Formula 3 above through polymerization may be bis [4-(4-aminophenoxy)phenyl] sulfone, bis(4-aminophenyl)sulfone, bis(3-aminophenyl)sulfone, 3,3'-diaminodiphenyl sulfone, 3,4'-diaminodiphenyl sulfone, 4,4'-diaminodiphenyl sulfone, 1,3-bis(3-aminophenyl sulfone)benzene, 1,3-bis(4-aminophenyl sulfone)benzene, 1,4-bis(4-aminophenyl sulfone)benzene, bis [3-(3-aminophenoxy)phenyl] sulfone), bis [3-(4-aminophenoxy)phenyl] sulfone), bis [4-(3-aminophenoxy)phenyl] sulfone), or a combination thereof.

Additionally, the diamine monomer that includes the carboxylic acid and forms the monomer unit represented by $Y_2$ in Formula 3 above through polymerization may be 5,5'-methylenebis(2-aminobenzoic acid) (MBAA), 3,5-diaminobenzoic acid (DABA), or a combination thereof.

Additionally, the diamine monomer that includes the oxygen atom, the $C_1$ to $C_{10}$ straight or branched hydrocarbon, or the combination thereof and forms the monomer unit represented by $Y_2$ in Formula 3 above through polymerization may be 4,4'-oxydianiline (ODA), 3,4'-methylenedianilne (3,4'-MDA), 1,3-bis(3-aminophenoxy)benzene

(APB), 1,4-bis(4-aminophenoxy)benzene, 1,3-bis(4-aminophenoxy)benzene, 1,3-bis[2-(4-aminophenyl)-2-propyl]benzene, 4,4'-diaminodiphenylmethane, 4,4'-diaminodiphenylethane, 4,4'-isopropylidenebis[(4-aminophenoxy)benzene], 4,4'-(1,4-phenylenediisopropylidene)bisaniline, or a combination thereof.

In one embodiment, the polyamide polymer may have a weight average molecular weight of 50,000 to 1,000,000.

Within the range of the weight average molecular weight of the polyamide polymer of the present disclosure, a higher weight average molecular weight may result in increased adhesiveness of the polyamide polymer.

When the weight average molecular weight of the polyamide polymer is less than 50,000, electrolyte solution stability of an electrode binder including the polyamide polymer may deteriorate. Additionally, stability of an electrode slurry including a binder including the polyamide polymer may deteriorate.

On the other hand, when the weight average molecular weight of the polyamide polymer exceeds 1,000,000, viscosity may increase during slurry preparation, making slurry coating difficult.

A binder according to another aspect of the present disclosure may include the polyamide polymer.

A slurry according to another aspect of the present disclosure may include the binder and an electrode active material.

In one embodiment, the slurry may include an organic solvent such as carboxymethyl cellulose, N-methylpyrrolidone (NMP), dimethylformamide (DMF), acetone, dimethylacetamide, or water as a solvent, and preferably carboxymethylcellulose may be used. Additionally, the slurry may include one or more solvents.

The carboxymethyl cellulose may have a degree of substitution of hydroxyl groups (-OH) by carboxymethyl groups ($-CH_2CO_2H$) of 0.7 to 1.2, a number average molecular weight (Mn) of 500,000 to 900,000, and a pH of 6.5 to 8.0.

Additionally, the slurry may include carboxymethyl cellulose (CMC) and an electrode active material that allows for intercalation and deintercalation of lithium ions.

For example, the slurry may be a positive electrode slurry, a negative electrode slurry, or a combination thereof.

As the electrode active material for forming an electrode used in the present disclosure, any electrode active material that is available in the relevant technical field may be used.

In one embodiment, the electrode active material is a material that participates in an electrochemical reaction, and is used in the production of negative electrode and positive electrode slurries. Depending on the type of electrode, it is categorized into a negative electrode active material and a positive electrode active material.

The negative electrode active material may be selected from the group consisting of carbon and graphite materials capable of lithium-ion intercalation and deintercalation, Si-based materials, metals and compounds alloyable with lithium, composites of carbon and graphite materials with a metal and a compound thereof, and lithium-containing nitrides.

The carbon and graphite materials may include natural graphite, artificial graphite, expanded graphite, carbon fibers, non-graphitizable carbon, carbon black, carbon nanotubes, fullerenes, activated carbon, hard carbon, and soft carbon. The Si-based materials may include a Si-based compound selected from Si, $SiO_x$ ($0<x<2$), a Si-Y alloy (wherein Y is an alkali metal, an alkaline earth metal, a group 13 element, a group 14 element, a transition metal, a rare earth element, or a combination thereof), a Si-C composite, or a combination thereof. The metals and elements alloyable with lithium may include Al, Si, Sn, Ag, Bi, Mg, Zn, In, Ge, Pb, Pd, Pt, and Ti. The negative electrode slurry may include the negative electrode active material in an amount of 20 to 80 parts by weight based on 100 parts by weight of the negative electrode slurry.

Specific examples of the positive electrode active material may include, but are not limited thereto: lithium metal; a lithium-cobalt-based oxide such as $LiCoO_2$; a lithium-manganese-based oxide such as $Li_{1+x}Mn_{2-x}O_4$ (wherein, x is 0 to 0.33), $LiMnO_3$, $LiMn_2O_3$, and $LiMnO_2$; a lithium-copper-based oxide such as $Li_2CuO_2$; a vanadium oxide such as $LiV_3O_8$, $V_2O_5$, and $Cu_2V_2O_7$; a lithium-nickel-based oxide expressed as $LiNi_{1-x}M_xO_2$ (wherein, M=Co, Mn, Al, Cu, Fe, Mg, B, or Ga and x=0.01 to 0.3); a lithium manganese composite oxide expressed as $LiMn_{2-x}M_xO_2$ (wherein, M=Co, Ni, Fe, Cr, Zn, or Ta, and x=0.01 to 0.1) or $Li_2Mn_3MO_8$ (wherein, M=Fe, Co, Ni, Cu, or Zn); a lithium-nickel-manganese-cobalt-based oxide expressed as $Li(Ni_aCo_bMn_c)O_2$ (wherein, $0 < a < 1$, $0 < b < 1$, $0 < c < 1$, $a+b+c=1$); a sulfur or disulfide compound; a phosphate such as $LiFePO_4$, $LiMnPO_4$, $LiCoPO_4$, and $LiNiPO_4$; and $Fe_2(MoO_4)_3$.

As a binder for a secondary battery, in addition to the binder of the present disclosure including the polyamide polymer including a monomer unit with an aromatic ring, any one selected from the group consisting of poly(meth)acrylic acid, poly(meth)acrylamide, carboxymethyl cellulose, polyvinylidene fluoride, a polyhexafluoropropylene-polyvinylidene fluoride copolymer (P(VdF/HFP)), poly(vinyl acetate), polyvinyl alcohol, polyethylene oxide, polyvinylpyrrolidone, alkylated polyethylene oxide, polyvinyl ether, poly(methyl methacrylate), poly(ethyl acrylate), polytetrafluoroethylene, polyvinyl chloride, polyacrylonitrile, polyvinylpyridine, styrene-butadiene rubber, acrylonitrile-butadiene rubber, and copolymers thereof, or a mixture of two or more thereof may be used.

The amount of the binder in the slurry composition is preferably 0.3 to 10 wt% in terms of solid content, and more preferably 0.7 to 8 wt%. When the amount is less than 0.3 wt%, it may be difficult to achieve sufficient adhesiveness within a current collector and an electrode composition. Whereas, when it exceeds 10 wt%, a binder ratio within an electrode slurry composition may increase, resulting in a reduction in battery capacity.

An electrode according to another aspect of the present disclosure may include a current collector; and an electrode active material layer, a non-coated area insulation coating layer, or a combination thereof, which is formed on the current collector and includes the binder of the present disclosure.

For example, the electrode may be a positive electrode, a negative electrode, or a combination thereof.

In one embodiment of the present disclosure, the current collector is a part where electron transfer occurs during the electrochemical reaction of the active material. Depending on the type of electrode, it is categorized into a negative electrode current collector and a positive electrode current collector. The current collector may be processed to form fine irregularities on a surface thereof so as to enhance adhesion to the electrode active material, and may be used in various forms such as films, sheets, foils, nets, porous structures, foams, and non-woven fabrics.

The negative electrode current collector may generally be fabricated to have a thickness of 5 to 30 μm. The negative electrode current collector is not particularly limited as long as it has conductivity without causing chemical changes in the battery. Examples thereof may include copper foil, nickel foil, stainless steel foil, titanium foil, nickel foam, copper foam, a polymer substrate coated with a conductive metal, or a combination thereof.

The positive electrode current collector may generally be fabricated to have a thickness of 3 to 500 μm. The positive electrode current collector is not particularly limited as long as it has high conductivity without causing chemical changes in the battery. Examples thereof may include copper, stainless steel, aluminum, nickel, titanium, sintered carbon, copper or stainless steel surface-treated with carbon, nickel, titanium, or silver, and aluminum-cadmium alloys.

The electrode may be manufactured through the steps of (a) preparing a composition for forming an electrode active material layer including an electrode active material and the binder of the present disclosure, and (b) applying the composition for forming the electrode active material layer onto a current collector, followed by drying.

The composition for forming the electrode active material layer may be stirred by a conventional method using a conventional mixer, such as a high-shear mixer and a homo mixer.

Step (b) is a step of manufacturing an electrode for a lithium secondary battery by applying the composition for forming the electrode active material layer prepared in step (a) onto the current collector and then drying the composition.

Here, the method of applying the composition for forming the electrode active material layer in the form of slurry is not limited, and examples thereof may include doctor blade coating, dip coating, gravure coating, slit die coating, spin coating, comma coating, bar coating, reverse roll coating, screen coating, and cap coating.

After coating and drying, an electrode for a secondary battery (particularly, a lithium secondary battery) in which an electrode active material layer is ultimately manufactured.

The current collector may be any electrically conductive material that does not chemically react with the slurry for electrode formation. Representative examples thereof may include aluminum foil and copper foil. A current collector having a thickness of 3 to 50 micrometers may be selected and used.

At this time, the electrode active material layer may further include a dispersant, a conductive agent, a filler, and other additives in addition to the electrode active material.

The electrode active material may be included in an amount of 90 to 99 wt% in terms of solid content. When the amount of the active material is low, the battery may not provide high capacity. Whereas, when the amount of the active material is too high, the amounts of the binder, the conductive agent, and the like are relatively low, which may lead to a deterioration in electrode adhesiveness, conductivity, and the like.

The conductive agent is not particularly limited and may be appropriately selected depending on the type of battery or capacitor. For example, in the case of a lithium-ion secondary battery, a carbon-based material such as graphite and activated carbon may be used, and in the case of a nickel-hydrogen secondary battery, cobalt oxide may be used, and for a negative electrode, nickel powder, cobalt oxide, titanium oxide, or carbon may be used.

Examples of the carbon-based material include acetylene black, furnace black, graphite, carbon fiber, fullerenes, and carbon nanotubes.

The conductive agent is usually used in an amount of 1 to 20 parts by weight, preferably 2 to 10 parts by weight, based on 100 parts by weight of the electrode active material.

Reducing the amount of the conductive agent while increasing the amount of the electrode active material may improve the energy density of a secondary battery. Therefore, it is important to achieve high efficiency even with the same amount of conductive agent.

The conductive agent used in a slurry for a secondary battery has higher conductive efficiency as it is dispersed more uniformly in a smaller size, thereby lowering resistance within the battery, improving output characteristics, and improving lifespan characteristics. When the conductive agent is dispersed unevenly in a large size, adhesiveness characteristics and conductivity may decrease even when it is used in the same amount, which may have a negative effect on lifespan characteristics and output characteristics of the battery. Additionally, when the viscosity of a dispersion is low, a solid content of the slurry may be increased, thereby improving the electrode production speed.

A separator according to another aspect of the present disclosure may include a porous substrate coated with a slurry composition including the binder of the present disclosure.

The separator needs to be an insulator that can separate the negative electrode and the positive electrode and

provide a passage through which only lithium ions can migrate. To this end, the separator requires good wettability to an electrolyte, and may be made of a porous polymer film such as PE/PP or a porous non-woven fabric. To prevent a battery short-circuit, a coated separator having enhanced heat resistance and mechanical strength, such as a ceramic-coated separator, may be used. The coating may be applied in a single layer or multiple layers.

The separator may be composed of a porous substrate. As the porous substrate, any porous substrate commonly used in electrochemical devices may be used. For example, a polyolefin-based porous membrane or a non-woven fabric may be used, but is not particularly limited thereto.

The separator may be a porous substrate made of any one selected from the group consisting of polyethylene, polypropylene, polybutylene, polypentene, polyethylene terephthalate, polybutylene terephthalate, polyester, polyacetal, polyamide, polycarbonate, polyimide, polyetheretherketone, polyethersulfone, polyphenylene oxide, polyphenylene sulfide, and polyethylene naphthalate, or a mixture of two or more thereof.

The slurry composition may include inorganic particles. The inorganic particles may be used without limitation as long as they are insulating particles, and may preferably be high dielectric constant insulating particles.

Specific examples of the inorganic particles may include $Al_2O_3$, AlOOH, $SiO_2$, $TiO_2$, $ZrO_2$, ZnO, NiO, CaO, $SnO_2$, $Y_2O_3$, MgO, $BaTiO_3$, $CaTiO_3$, $SrTiO_3$, SiC, $Li_3PO_4$, $Pb(Zr,Ti)O_3$(PZT), $(Pb,La)(Zr,Ti)O_3$(PLZT), and a mixture thereof.

The inorganic particles are not particularly limited in size, but may have an average particle diameter of, for example, 0.01 to 30 μm, and more preferably 0.1 to 10 μm. When the average particle size of the inorganic particles is less than the above preferable range, dispersibility may decrease. Whereas, when it exceeds the preferable range, the thickness of the coating layer may increase after coating, resulting in a deterioration in mechanical properties.

Additionally, the inorganic particles are not particularly limited in shape, and may be, for example, spherical, plate-shaped, elliptical, or irregular.

The separator may be manufactured by coating at least one surface of a porous substrate film with the slurry composition, or by forming the slurry composition into a film form and laminating the film to the porous substrate film.

Meanwhile, the separator may be used as a separator for a secondary battery, for example, a separator for a lithium secondary battery.

One example of manufacturing a separator may include the steps of: (a) preparing a polymer solution by dissolving or dispersing the binder in a solvent; (b) adding and mixing the inorganic particles to the polymer solution of step (a); and (c) coating at least one region selected from the group consisting of a surface of a polyolefin-based separator substrate and a portion of pores in the substrate with the mixture of step (b).

First, 1) the binder is formulated and prepared in the form of a polymer solution in which the binder is dissolved or dispersed in an appropriate solvent.

As the solvent, one having a solubility index similar to that of the copolymer used as the binder and having a low boiling point is preferable. This is to facilitate uniform mixing and subsequent solvent removal. Non-limiting examples of available solvents may include acetone, tetrahydrofuran, methylene chloride, chloroform, dimethylformamide, N-methyl-2-pyrrolidone (NMP), cyclohexane, water, or a mixture thereof. More preferably, the solvent may be used in a water-dispersed state.

2) The inorganic particles are added and dispersed in the prepared polymer solution to prepare a mixture of the inorganic particles and the polymer.

A process of dispersing the polymer solution and the inorganic particles is preferably performed. At this time, the duration time of the dispersion may appropriately range from 1 to 50 hours. A dispersion method may employ a conventional method, and particularly, a ball milling method is preferable.

The mixture composed of the inorganic particles and the polymer is not particularly limited in composition. However, the composition of the mixture may be adjusted to control the thickness, pore size, and porosity of the finally manufactured organic/inorganic composite porous separator of the present disclosure.

That is, as the ratio of the inorganic particles I to the polymer P (ratio=I/P) increases, the porosity of the separator increases, which results in an increase in the thickness of the separator under the same solid content (inorganic particle weight+polymer weight). Additionally, an increase in a likelihood of pore formation between the inorganic particles leads to an increase in pore size. In this case, as the size (particle diameter) of the inorganic particles increases, the interstitial distance between the inorganic particles also increases, resulting in a larger pore size.

3) The prepared polyolefin-based separator substrate was coated with the prepared mixture of the inorganic particles and the polymer and then dried, thereby obtaining the separator of the present disclosure.

At this time, a method of coating the prepared polyolefin-based separator substrate with the mixture of the inorganic particles and the polymer may employ a conventional coating method known in the art. For example, various methods, such as dip coating, die coating, roll coating, comma coating, or combinations of thereof, may be used. Additionally, when coating the polyolefin-based separator substrate with the mixture of the inorganic particles and the polymer, the coating may be applied to both surfaces of the separator substrate or selectively to on only one surface.

A slurry composition for a secondary battery non-coated area insulation coating layer according to another aspect of the present disclosure may include the binder of the present disclosure.

Additionally, the slurry composition for the secondary battery non-coated area insulation coating layer may further include inorganic particles. The inorganic particles may be AlOOH, $Al_2O_3$, $\gamma$-AlOOH, $Al(OH)_3$, $SiO_2$, silicon carbide (SiC), boron nitride (BN), or a combination thereof.

The slurry composition for the secondary battery non-coated area insulation coating layer may include 5 to 30 wt% of the binder and 70 to 95 wt% of the inorganic particles, based on a total of 100 wt% of the binder and the inorganic particles.

Meanwhile, the solid content of the slurry composition for the secondary battery non-coated area insulation coating layer may be 10 to 45 wt%.

For example, the slurry composition for the secondary battery non-coated area insulation coating layer may be applied to an electrode current collector and dried, thereby forming a non-coated area insulation coating layer of a secondary battery electrode.

A secondary battery according to another aspect of the present disclosure may include the binder of the present disclosure.

For example, the secondary battery may include a positive electrode, a negative electrode, a separator, or a combination thereof, each including the binder of the present disclosure.

The secondary battery may include the positive electrode, the negative electrode, the separator interposed between the positive electrode and the negative electrode, and an electrolyte solution.

The secondary battery may be manufactured by a conventional method known in the art, for example, by assembling the electrodes with the separator interposed therebetween and injecting the electrolyte solution into the assembly.

Meanwhile, the electrolyte solution of the secondary battery is a non-aqueous electrolyte containing a lithium salt, and is composed of a lithium salt and a solvent. As the solvent, a non-aqueous organic solvent, an organic solid electrolyte, and an inorganic solid electrolyte may be used.

The lithium salt is a substance that is likely to be dissolved in the non-aqueous electrolyte solution, and examples thereof may include LiCl, LiBr, LiI, $LiClO_4$, $LiBF_4$, $LiB_{10}Cl_{10}$, $LiPF_6$, $LiAsF_6$, $LiSbF_6$, $LiAlCl_4$, LiSCN, $LiC_4BO_8$, $LiCF_3CO_2$, $LiCH_3SO_3$, $LiCF_3SO_3$, $LiN(SO_2CF_3)_2$, $LiN(SO_2F)_2$, $LiN(SO_2C_2F_5)_2$, $LiC_4F_9SO_3$, $LiC(CF_3SO_2)_3$, $(CF_3SO_2)\cdot_2NLi$, lithium chloroborane, lower aliphatic lithium carbonate, lithium tetraphenylborate, and imide.

The non-aqueous organic solvent may be a non-aprotic organic solvent, and examples thereof may include, N-methyl-2-pyrrolidone, propylene carbonate, ethylene carbonate, butylene carbonate, dimethyl carbonate, diethyl carbonate, ethylmethyl carbonate, gamma-butyrolactone, 1,2-dimethoxy ethane, 1,2-diethoxy ethane, tetrahydroxy franc, 2-methyltetrahydrofuran, dimethyl sulfoxide, 1,3-dioxolane, 4-methyl-1,3-dioxene, diethyl ether, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Examples of the organic solid electrolyte may include polyethylene derivatives, polyethylene oxide derivatives, polypropylene oxide derivatives, phosphoric acid ester polymers, poly agitation lysine, polyester sulfides, polyvinyl alcohols, polyvinylidene fluorides, and polymers having secondary dissociation groups.

Examples of the inorganic solid electrolyte may include nitrides, halides, and sulfates of lithium such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, and $Li_3PO_4$-$Li_2S$-$SiS_2$.

Additionally, the non-aqueous electrolyte solution may further include other additives for the purpose of improving charge/discharge characteristics, flame retardancy, and the like. Examples of the additives may include pyridine, triethylphosphite, triethanolamine, cyclic ether, ethylenediamine, n-glyme, hexaphosphate triamide, nitrobenzene derivatives, sulfur, quinone imine dye, N-substituted oxazolidinone, N,N-substituted imidazolidine, ethylene glycol dialkyl ether, ammonium salts, pyrrole, 2-methoxyethanol, aluminum trichloride, fluoroethylene carbonate (FEC), propene sultone (PRS), and vinylene carbonate (VC).

The lithium secondary battery according to the present disclosure may be subjected to not only a conventional winding process but also a lamination stack/folding process of the separator and the electrodes. Additionally, a casing of the battery may be cylindrical, rectangular, pouch-shaped, or coin-shaped.

In one embodiment, the secondary battery (cell) including the binder of the present disclosure may have an initial discharge capacity of equal to or greater than 190 mAh/g.

For example, the initial discharge capacity may be equal to or greater than 193 mAh/g, equal to or greater than 195 mAh/g, or equal to or greater than 196 mAh/g.

At this time, the initial discharge capacity may be determined by an initial formation process including: charging to 4.2 V at a 0.1C rate in CC/CV mode, followed by discharging to 2.8 V at a 0.1C rate; subsequently charging to 4.2 V at a 0.2C rate, followed by discharging to 2.8 V at a 0.2C rate; and subsequently charging to 4.2 V at a 0.5C rate, followed by discharging to 2.8 V at a 0.5C rate. The chamber temperature may be set to 25°C.

During the initial formation process, the discharge capacity upon discharging to 2.8 V at a 0.1C rate may be defined as the initial discharge capacity.

In one embodiment, the secondary battery (cell) including the binder of the present disclosure may have an initial efficiency of equal to or greater than 85%.

For example, the initial efficiency may be equal to or greater than 86%, equal to or greater than 87%, or equal to or greater than 87.15%.

At this time, the initial efficiency may be calculated using the following Equation 1.

<Equation 1>

$$\text{Initial efficiency [\%]} = [\text{initial discharge capacity / initial charge capacity}] \times 100$$

In one embodiment, the secondary battery (cell) including the binder of the present disclosure may have a DC-IR of equal to or less than 23.5 mΩ.

For example, the DC-IR may be equal to or less than 23.4 mΩ, equal to or less than 23.3 mΩ, equal to or less than 23.2 mΩ, equal to or less than 23.1 mΩ, equal to or less than 23 mΩ, equal to or less than 21 mΩ, or equal to or less than 19.4 mΩ.

In one embodiment, the secondary battery (cell) including the binder of the present disclosure may have a cycle stability of equal to or greater than 95%, the cycle stability being the ratio of the cell capacity after completion of 100 cycles to the initial capacity (capacity in the first cycle).

For example, the cycle stability may be equal to or greater than 95.5%, equal to or greater than 96%, or equal to or greater than 96.3%.

To measure the cycle stability, charging may be carried out in CC/CV mode to 4.2 V at a 1C rate, followed by discharging to 2.8 V at a 1C rate. The chamber temperature may be set to 25°C.

Here, "C" refers the discharge rate of a cell, which is defined as the total cell capacity divided by the total discharge time.

Under the set conditions, the cell may be subjected to charge/discharge cycling for cycle analysis. Here, one charge followed by one discharge constitutes one cycle.

The cell cycle stability after completion of 100 cycles may be calculated using the following Equation 1.

<Equation 1>

$$\text{Cycle stability (\%)} = (\text{100th cycle capacity / initial capacity}) \times 100$$

Hereinafter, the present disclosure will be described in more detail by way of examples, but the present disclosure is not limited to these examples.

**Preparation Example 1. Preparation of Polymer for Binder**

[Example 1]

In a 500 ml four-necked flask under a nitrogen atmosphere, N-methyl-2-pyrrolidone (NMP), 4,4'-oxydianiline (ODA), which is a monomer forming a monomer unit containing an ether group, bis[4-(4-aminophenoxy)phenyl] sulfone (BAPS), and 5,5'-methylenebis(2-aminobenzoic acid) (MBAA), which is a monomer containing a carboxylic acid, were added and stirred.

MBAA was fixed at 5 mol% based on a total of 100 mol% of the monomers for a polyamide copolymer used as a binder, and the molar ratio of BAPS to ODA was 7:3.

After lowering the temperature inside a reactor to equal to or less than 5°C, isophthaloyl chloride (IPC), which is a monomer unit containing an aromatic ring, was added and reacted.

Terephthaloyl chloride (TPC), which is a monomer that forms a monomer unit containing an aromatic ring, was added thereto and stirred for a sufficient time.

The molar ratio of IPC to TPC was 3:7.

An olefin-based neutralizing agent was added to the solution whose viscosity had risen to a predetermined level and stirred to remove HCl generated during synthesis.

Finally, a polyamide copolymer solution for a binder was prepared with a solid concentration of 10 wt%.

[Example 2]

A polyamide copolymer solution for a binder was prepared in the same manner as in Example 1, except that the

molar ratio of BAPS to ODA was changed to 5:5.

[Example 3]

A polyamide copolymer solution for a binder was prepared in the same manner as in Example 1, except that the molar ratio of BAPS to ODA was changed to 3:7.

[Example 4]

A polyamide copolymer solution for a binder was prepared in the same manner as in Example 1, except that the molar ratio of BAPS to ODA was changed to 1:9.

[Example 5]

In a 500 ml four-necked flask under a nitrogen atmosphere, N-methyl-2-pyrrolidone (NMP), 3,4'-methylenedianilne (3,4'-MDA), which is a monomer forming a monomer unit containing an ether group, bis[4-(4-aminophenoxy) phenyl] sulfone (BAPS), and 5,5'-methylenebis(2-aminobenzoic acid) (MBAA), which is a monomer containing a carboxylic acid, were added and stirred.

MBAA was fixed at 5 mol% based on a total of 100 mol% of the monomers for a polyamide copolymer used as a binder, and the molar ratio of BAPS to 3,4'-MDA was 7:3.

After lowering the temperature inside a reactor to equal to or less than 5°C, isophthaloyl chloride (IPC), which is a monomer unit containing an aromatic ring, was added and reacted.

Terephthaloyl chloride (TPC), which is a monomer that forms a monomer unit containing an aromatic ring, was added thereto and stirred for a sufficient time.

The molar ratio of IPC to TPC was 3:7.

An olefin-based neutralizing agent was added to the solution whose viscosity had risen to a predetermined level and stirred to remove HCl generated during synthesis.

Finally, a polyamide copolymer solution for a binder was prepared with a solid concentration of 10 wt%.

[Example 6]

A polyamide copolymer solution for a binder was prepared in the same manner as in Example 5, except that the molar ratio of BAPS to 3,4'-MDA was changed to 5:5.

[Example 7]

A polyamide copolymer solution for a binder was prepared in the same manner as in Example 5, except that the molar ratio of BAPS to 3,4'-MDA was changed to 3:7.

[Example 8]

A polyamide copolymer solution for a binder was prepared in the same manner as in Example 5, except that the molar ratio of BAPS to 3,4'-MDA was changed to 1:9.

[Example 9]

In a 500 ml four-necked flask under a nitrogen atmosphere, N-methyl-2-pyrrolidone (NMP), 1,3-bis(3-aminophenoxy)benzene (APB), which is a monomer forming a monomer unit containing an ether group, bis[4-(4-aminophenoxy) phenyl] sulfone (BAPS), and 5,5'-methylenebis(2-aminobenzoic acid) (MBAA), which is a monomer containing a carboxylic acid, were added and stirred.

MBAA was fixed at 5 mol% based on a total of 100 mol% of the monomers for a polyamide copolymer used as a binder, and the molar ratio of BAPS to APB was 7:3.

After lowering the temperature inside a reactor to equal to or less than 5°C, isophthaloyl chloride (IPC), which is a monomer unit containing an aromatic ring, was added and reacted.

Terephthaloyl chloride (TPC), which is a monomer that forms a monomer unit containing an aromatic ring, was added thereto and stirred for a sufficient time.

The molar ratio of IPC to TPC was 3:7.

An olefin-based neutralizing agent was added to the solution whose viscosity had risen to a predetermined level

and stirred to remove HCl generated during synthesis.

Finally, a polyamide copolymer solution for a binder was prepared with a solid concentration of 10 wt%.

[Example 10]

A polyamide copolymer solution for a binder was prepared in the same manner as in Example 9, except that the molar ratio of BAPS to APB was changed to 5:5.

[Example 11]

A polyamide copolymer solution for a binder was prepared in the same manner as in Example 9, except that the molar ratio of BAPS to APB was changed to 3:7.

[Example 12]

A polyamide copolymer solution for a binder was prepared in the same manner as in Example 9, except that the molar ratio of BAPS to APB was changed to 2:8.

[Comparative Example 1]

A polyamide copolymer solution for a binder was prepared in the same manner as in Example 1, except that ODA was not added (the molar ratio of BAPS to ODA was 10:0).

The monomer compositions of Examples 1 to 12 and Comparative Example 1, as well as the molar ratios of BAPS to ODA, BAPS to 3,4'-MDA, and BAPS to APB, are shown in Table 1 below.

Table 1

| | Monomer composition | Molar ratio of BAPS to ODA (BAPS : ODA) |
|---|---|---|
| Example 1 | BAPS/ ODA / MBAA / TPC / IPC | 7:3 |
| Example 2 | BAPS / ODA / MBAA / TPC / IPC | 5:5 |
| Example 3 | BAPS / ODA / MBAA / TPC / IPC | 3:7 |
| Example 4 | BAPS / ODA / MBAA / TPC / IPC | 1:9 |
| | Monomer composition | Molar ratio of BAPS to 3,4'-MDA (BAPS : 3,4'-MDA) |
| Example 5 | BAPS/ 3,4'-MDA / MBAA / TPC / IPC | 7:3 |
| Example 6 | BAPS / 3,4'-MDA / MBAA / TPC / IPC | 5:5 |
| Example 7 | BAPS / 3,4'-MDA / MBAA / TPC / IPC | 3:7 |
| Example 8 | BAPS / 3,4'-MDA / MBAA / TPC / IPC | 1:9 |
| | Monomer composition | Molar ratio of BAPS to APB (BAPS : APB) |
| Example 9 | BAPS/ APB / MBAA / TPC / IPC | 7:3 |
| Example 10 | BAPS/ APB / MBAA / TPC / IPC | 5:5 |
| Example 11 | BAPS/ APB / MBAA / TPC / IPC | 3:7 |
| Example 12 | BAPS/ APB / MBAA / TPC / IPC | 2:8 |
| Comparative Example 1 | BAPS/ TPC / MBAA / IPC | 10:0 |

**Preparation Example 2. Preparation of Positive Electrode Slurry and Positive Electrode**

A positive electrode active material slurry composition having a solid content of 65 wt% was prepared by mixing 97.5 wt% of NCM811 as an electrode active material, 1.5 wt% of each of the polymers for the binders of Examples 1 to 12 and Comparative Example 1, 1 wt% of a CNT dispersion, and a remainder of NMP.

That is, prepared was a positive electrode active material slurry composition having a solid content of 65 wt%, and including 97.5 wt% of NCM811 as an electrode active material, 1.5 wt% of each of the polymers for the binders of Examples

1 to 12 and Comparative Example 1, 1 wt% of a CNT dispersion, and a remainder of NMP.

Meanwhile, the positive electrode active material slurry composition may include 96 to 98 wt% of the electrode active material, 1.5 to 2 wt% of the polymer for the binder, and 0.7 to 0.8 wt% of the CNT dispersion. Additionally, the solid content of the positive electrode active material slurry composition may be 60 to 70 wt%.

The prepared positive electrode slurry composition was coated onto an aluminum (Al) foil, which is a positive electrode current collector with a thickness of 20 μm, using an applicator, and dried in a 110°C convection oven for 1 hour. The dried positive electrode was then rolled using a roll press to manufacture a positive electrode.

**Preparation Example 3. Manufacture of Cell**

A non-aqueous electrolyte solution containing 1 wt% of 1 M $LiPF_6$, fluoro ethylene carbonate (FEC), 1 wt% of propylene sulfite (PS), and 1 wt% of LiPO2F2 was used as an electrolyte. A polyolefin separator was interposed between a positive electrode, which prepared according to Preparation Example 2 using a positive electrode plate fabricated with each of the polymers for the binders of Examples 1 to 10 and Comparative Example 1, and a negative electrode, and a lithium secondary battery was manufactured as a 2032 coin cell type without distinction of form.

**Evaluation Example 1. Measurement of Adhesiveness**

Each of the positive electrodes manufactured in Preparation Example 2 was dried at 130°C for 1 hour and then cut into a size of 15 cmx2.5 cm.

Afterwards, a surface coated with the positive electrode was adhered to an acrylic plate with double-sided tape attached, and pressed 3 to 4 times with a rubber roller for pressing to prepare a peel-off test sample.

The prepared sample was loaded into a universal testing machine (UTM) for measuring adhesiveness, and subjected to a 2.5 cm 180° peel test. The loading value (gf/25mm) was measured to calculate adhesiveness of the positive electrodes.

The calculated adhesiveness values of the positive electrodes are shown in Table 2 below.

Table 2

| Polymer for Binder | Adhesiveness (gf) |
|---|---|
| Example 1 | 99.35 |
| Example 2 | 113.56 |
| Example 3 | 150.35 |
| Example 4 | 211.48 |
| Example 5 | 91.54 |
| Example 6 | 118.71 |
| Example 7 | 135.56 |
| Example 8 | 190.11 |
| Example 9 | 90.59 |
| Example 10 | 110.25 |
| Example 11 | 120.11 |
| Example 12 | 125.45 |
| Comparative Example 1 | 67.59 |

As can be seen from Table 2 above, the polymers for the binders of Examples 1 to 12 exhibited an adhesiveness of equal to or greater than 90.59 gf/25 mm.

The polymers for the binders of Examples 1 to 12 exhibited significantly improved adhesiveness compared to the polyamide binder polymer of Comparative Example 1, in which ODA was not used as a monomer.

Meanwhile, the polymers for the binders of Examples 1 to 4 exhibited improved positive electrode adhesiveness as the amount of ODA increased in the molar ratio of BAPS to ODA (mol% of BAPS:mol% of ODA).

Meanwhile, the polymers for the binders of Examples 5 to 8 exhibited improved positive electrode adhesiveness

as the amount of 3,4'-MDA increased in the molar ratio of BAPS to 3,4'-MDA (mol% of BAPS:mol% of 3,4'-MDA).

Meanwhile, the polymers for the binders of Examples 9 to 12 exhibited improved positive electrode adhesiveness as the amount of APB increased in the molar ratio of BAPS to APB (mol% of BAPS:mol% of APB).

Consequently, the results revealed that the binder of the present disclosure, which includes the polyamide polymer in which the molar ratios of BAPS to ODA, BAPS to 3,4'-MDA, BAPS to APB are appropriately adjusted, demonstrates superior adhesiveness characteristics.

**Evaluation Example 2. Measurement of Battery Performance**

The cells manufactured according to Preparation Example 3 using the positive electrode plates fabricated with the polymers for the binders of Examples 1 to 12 and Comparative Example 1 were subjected to an initial formation process. Specifically, the cells were charged to 4.2 V at a 0.1C rate in CC/CV mode and discharged to 2.8 V at a 0.1C rate, followed by charging to 4.2 V at a 0.2C rate and discharging to 2.8 V at a 0.2C rate, and subsequently charging to 4.2 V at a 0.5C rate and discharging to 2.8 V at a 0.5C rate. The chamber temperature was 25°C. Here, "C" refers to the discharge rate of a cell, which is defined as the total cell capacity divided by the total discharge time.

The initial discharge capacity and initial efficiency of the cells manufactured according to Preparation Example 3 using the positive electrode plates fabricated with the polymers for the binders of Examples 1 to 12 and Comparative Example 1 were measured, and the results are shown in Table 3 below.

During the initial formation process, the discharge capacity upon discharging to 2.8 V at a 0.1C rate was defined as the initial discharge capacity. The initial efficiency was calculated using the following Equation 1.

<Equation 1>

$$\text{Initial efficiency [\%]} = [\text{initial discharge capacity} / \text{initial charge capacity}] \times 100$$

Table 3

| Polymer for Binder | Initial discharge capacity (mAh/g) | Initial efficiency (%) |
|---|---|---|
| Example 1 | 196.68 | 87.5 |
| Example 2 | 196.73 | 87.9 |
| Example 3 | 196.81 | 87.8 |
| Example 4 | 196.01 | 87.5 |
| Example 5 | 197.14 | 87.55 |
| Example 6 | 197.87 | 87.62 |
| Example 7 | 198.42 | 87.72 |
| Example 8 | 199.19 | 87.15 |
| Example 9 | 199.11 | 87.79 |
| Example 10 | 199.35 | 87.79 |
| Example 11 | 199.77 | 87.56 |
| Example 12 | 199.54 | 87.77 |
| Comparative Example 1 | 196.684 | 87.11 |

As can be seen from Table 3 above, the cells manufactured according to Preparation Example 3 using the positive electrode plates fabricated with the polymers for the binders of Examples 1 to 12 exhibited an initial discharge capacity of equal to or greater than 196.01 mAh/g and an initial efficiency of equal to or greater than 87.15%.

The cells manufactured according to Preparation Example 3 using the positive electrode plates fabricated with the polymers for the binders of Examples 1 to 12 were found to exhibit initial discharge capacity and initial efficiency comparable to or improved over those of the cell manufactured according to Preparation Example 3 using the positive electrode plate fabricated with the polyamide binder polymer of Comparative Example 1, in which ODA was not used as a monomer.

When the electrode binders including the polyamide polymers (Examples 1 to 12) were applied, improved

adhesiveness characteristics were observed compared to the electrode binder including the polymer of Comparative Example 1, which is presumed to suppress electrode delamination caused by lithium-ion movement and thereby improve the electrochemical characteristics of the secondary battery.

**Evaluation Example 3. Measurement of DC-IR**

The cells manufactured according to Preparation Example 3 using the positive electrode plates fabricated with the polymers for the binders of Examples 1 to 12 and Comparative Example 1 were charged to 4.2 V at a 1C rate in CC/CV mode and then discharged to 2.8 V at a 1C rate.

The DC-IR value was measured when the discharged battery reached a state of charge (SoC) of 50%.

The chamber temperature was 25°C. Here, "C" refers the discharge rate of a cell, which is defined as the total cell capacity divided by the total discharge time.

The DC-IR values of the cells manufactured according to Preparation Example 3 using the positive electrode plates fabricated with the polymers for the binders of Examples 1 to 12 and Comparative Example 1 were measured, and the results are shown in Table 4 below.

Table 4

| Polymer for Binder | DC-IR (mΩ) |
|---|---|
| Example 1 | 21.1 |
| Example 2 | 21.9 |
| Example 3 | 22.9 |
| Example 4 | 23.1 |
| Example 5 | 19.1 |
| Example 6 | 18.8 |
| Example 7 | 18.5 |
| Example 8 | 18.6 |
| Example 9 | 19.4 |
| Example 10 | 19.1 |
| Example 11 | 18.9 |
| Example 12 | 18.9 |
| Comparative Example 1 | 22.2 |

As can be seen from Table 4 above, the cells manufactured according to Preparation Example 3 using the positive electrode plates fabricated with the polymers for the binders of Examples 1 to 12 exhibited a DC-IR of equal to or less than 23.1 mΩ.

Notably, the cells manufactured according to Preparation Example 3 using the positive electrode plates fabricated with the polymers for the binders of Examples 5 to 12 exhibited a DC-IR of equal to or less than 19.4 mΩ.

That is, the cells manufactured according to Preparation Example 3 using the positive electrode plates fabricated with the polymers for the binders of Examples 5 to 12 were found to exhibit lower DC-IR compared to the cell manufactured according to Preparation Example 3 using the positive electrode plate fabricated with the polyamide binder polymer of Comparative Example 1, in which ODA was not used as a monomer.

Additionally, the cells manufactured according to Preparation Example 3 using the positive electrode plates fabricated with the polymers for the binders of Examples 1 to 4 were found to exhibit DC-IR comparable to that of the cell manufactured according to Preparation Example 3 using the positive electrode plate fabricated with the polyamide binder polymer of Comparative Example 1, in which ODA was not used as a monomer.

**Evaluation Example 4. Measurement of Cycle Stability**

Charge/discharge and chamber temperature conditions were set for analyzing the cycle stability of the cells manufactured according to Preparation Example 3 using the positive electrode plates fabricated with the polymers for the binders of Examples 1 to 4 and Comparative Examples 1 to 3.

Charging was carried out in CC/CV mode to 4.2 V at a 1C rate, followed by discharging to 2.8 V at a 1C rate. The

chamber temperature was 25°C. Here, "C" refers the discharge rate of a cell, which is defined as the total cell capacity divided by the total discharge time.

Under the set conditions, the cells were subjected to charge/discharge cycling for cycle analysis. Here, one charge followed by one discharge constituted one cycle, and a total of 100 cycles were performed. The cell capacity after completion of 100 cycles to the initial capacity (capacity in the first cycle) was measured to determine how much of the cell capacity retained over the course of cycling.

The cycle stability of the cells manufactured according to Preparation Example 3 using the positive electrode plates fabricated with the polymers for the binders of Examples 1 to 12 and Comparative Example 1 was measured, and the results are shown in Table 5 below.

The cell cycle stability after completion of 100 cycles was calculated using the following Equation 1.

<Equation 1>

$$\text{Cycle stability (\%)} = (\text{100th cycle capacity} / \text{initial capacity}) \times 100$$

Table 5

| Polymer for Binder | Cycle stability over 100 cycles (%) |
|---|---|
| Example 1 | 97.32 |
| Example 2 | 96.94 |
| Example 3 | 96.70 |
| Example 4 | 96.33 |
| Example 5 | 97.34 |
| Example 6 | 97.12 |
| Example 7 | 96.99 |
| Example 8 | 96.76 |
| Example 9 | 96.99 |
| Example 10 | 97.21 |
| Example 11 | 96.65 |
| Example 12 | 96.88 |
| Comparative Example 1 | 96.25 |

As can be seen from Table 5 above, the cells manufactured according to Preparation Example 3 using the positive electrode plates fabricated with the polymers for the binders of Examples 1 to 12 exhibited a cycle stability of equal to or greater than 96.33%.

The cells manufactured according to Preparation Example 3 using the positive electrode plates fabricated with the polymers for the binders of Examples 1 to 12 were found to exhibit cycle stability comparable to or improved over that of the cell manufactured according to Preparation Example 3 using the positive electrode plate fabricated with the polyamide binder polymer of Comparative Example 1, in which ODA was not used as a monomer.

The results of the cell cycle stability measurements showed a trend similar to that observed in the DC-IR measurements, suggesting that the reduction in DC-IR positively influences the cell cycle stability.

Consequently, the binder of the present disclosure, including the polyamide polymer with appropriately adjusted molar ratios of BAPS to ODA, BAPS to 3,4'-MDA, and BAPS to APB, was confirmed to achieve improvement in DC-IR and enhancement in cycle stability.

Furthermore, the application of the binder including the polyamide polymer of the present disclosure was found to lead to enhancement in characteristics of the second battery.

The scope of the present disclosure is defined by the accompanying claims rather than the description which is presented above, and all of changes and modifications obtained from the meaning and range of claims and equivalent concepts should be construed as being included in the scope of the present disclosure.

## Claims

1. A binder comprising

   a polyamide polymer comprising
   a first monomer unit containing an ether group, a $C_1$ to $C_{10}$ straight or branched hydrocarbon group, or a combination thereof.

2. The binder of claim 1, wherein the first monomer unit includes a structure represented by the following Formula 1, which includes two aromatic rings connected to each other by the $C_1$ to $C_{10}$ straight or branched hydrocarbon,

   [Formula 1]

   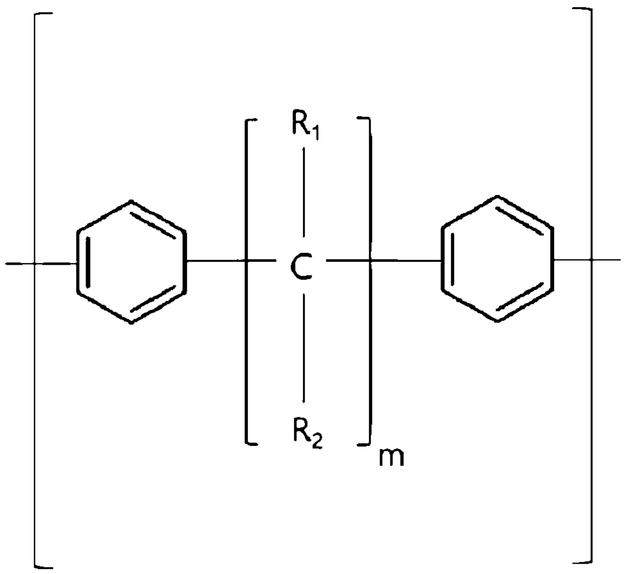

   wherein, in Formula 1 above,

   $R_1$ and $R_2$ are each independently hydrogen; or a $C_1$ to $C_4$ straight or branched hydrocarbon, and
   m is 1 to 4.

3. The binder of claim 1, wherein the first monomer unit is formed by polymerization of a first monomer represented by the following Formula 2,

   [Formula 2]

   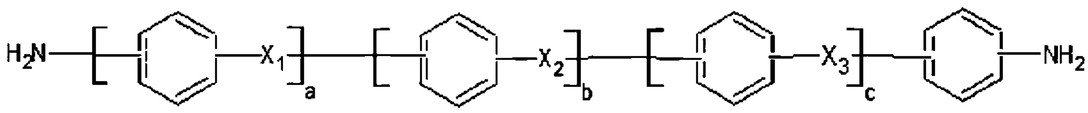

   wherein, in Formula 2 above,

   a+b+c are 1 to 10, and
   $X_1$, $X_2$, and $X_3$ are each independently an oxygen atom; or a $C_1$ to $C_{10}$ straight or branched hydrocarbon.

4. The binder of claim 3, wherein the first monomer is 4,4'-oxydianiline (ODA), 3,4'-methylenedianilne (3,4'-MDA), 1,3-bis(3-aminophenoxy)benzene (APB), 1,4-bis(4-aminophenoxy)benzene, 1,3-bis(4-aminophenoxy)benzene, 1,3-bis [2-(4-aminophenyl)-2-propyl]benzene, 4,4'-diaminodiphenylmethane, 4,4'-diaminodiphenylethane, 4,4'-isopropylidenebis[(4-aminophenoxy)benzene], 4,4'-(1,4-phenylenediisopropylidene)bisaniline, or a combination thereof.

5. The binder of claim 1,

wherein the polyamide polymer further comprises
a second monomer unit containing at least one aromatic ring.

6. The binder of claim 1,

wherein the polyamide polymer further comprises
a third monomer unit containing a sulfone, a fourth monomer unit containing a carboxylic acid, or a combination thereof.

7. The binder of claim 5, wherein the second monomer that forms the second monomer unit through polymerization is a terephthaloyl chloride monomer, an isophthaloyl chloride monomer, a phthalic acid monomer, an isophthalic acid monomer, a terephthalic acid monomer, or a combination thereof.

8. The binder of claim 6, wherein the third monomer that forms the third monomer unit through polymerization is bis[4-(4-aminophenoxy)phenyl]sulfone, bis(4-aminophenyl)sulfone, bis(3-aminophenyl)sulfone, 3,3'-diaminodiphenyl sulfone, 3,4'-diaminodiphenyl sulfone, 4,4'-diaminodiphenyl sulfone, 1,3-bis(3-aminophenyl sulfone)benzene, 1,3-bis(4-aminophenyl sulfone)benzene, 1,4-bis(4-aminophenyl sulfone)benzene, bis [3-(3-aminophenoxy)phenyl] sulfone, bis [3-(4-aminophenoxy)phenyl]sulfone, bis [4-(3-aminophenoxy)phenyl] sulfone, or a combination thereof.

9. The binder of claim 6, wherein the fourth monomer that forms the fourth monomer unit through polymerization is 5,5'-methylenebis(2-aminobenzoic acid) (MBAA), 3,5-diaminobenzoic acid (DABA), or a combination thereof.

10. The binder of claim 6, wherein a molar ratio of the third monomer unit to the first monomer unit (mol% of the third monomer unit:mol% of the first monomer unit) is 90:10 to 1:99, based on a total of 100 mol% of the third monomer unit and the first monomer unit.

11. The binder of claim 1, wherein the polyamide polymer includes a monomer repeating unit represented by the following Formula 3,

[Formula 3]

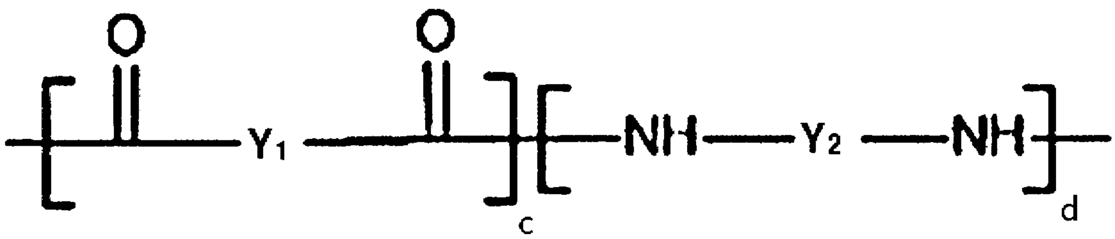

wherein, in Formula 3 above,

$Y_1$ includes at least one aromatic ring substituted with a halogen element, hydrogen, a hydroxyl group, a carboxyl group, a $C_1$ to $C_4$ straight or branched hydrocarbon group, or a combination thereof, and
$Y_2$ includes two aromatic rings connected to each other by $-SO_2-$;
an aromatic ring substituted with at least one carboxyl group;
two aromatic rings connected to each other by an oxygen atom or a $C_1$ to $C_{10}$ straight or branched hydrocarbon; or a combination thereof, and
wherein the two aromatic rings connected to each other by $-SO_2-$ are substituted with a halogen element, hydrogen, a hydroxyl group, a carboxyl group, a $C_1$ to $C_4$ straight or branched hydrocarbon group substituted or unsubstituted with a halogen element, or a combination thereof, and

$$c+d=1.$$

(wherein, the $Y_2$ must include two aromatic rings connected to each other by an oxygen atom or a $C_1$ to $C_{10}$ straight or branched hydrocarbon)

**12.** A slurry, comprising:

the binder of any one of claims 1 to 11; and
an electrode active material.

**13.** An electrode, comprising:

a current collector; and
an electrode active material layer, a non-coated area insulation coating layer, or a combination thereof, which is formed on the current collector and includes the binder of any one of claims 1 to 11.

**14.** A slurry composition for a secondary battery non-coated area insulation coating layer, the slurry composition comprising:
the binder of any one of claims 1 to 11.

**15.** A secondary battery, comprising:
the binder of any one of claims 1 to 11.

Europäisches Patentamt
European Patent Office
Office européen des brevets

# EUROPEAN SEARCH REPORT

Application Number
EP 25 20 6987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | KR 2024 0066611 A (HANSOL CHEMICAL CO LTD [KR]) 16 May 2024 (2024-05-16)<br>* paragraphs [0041] - [0044] *<br>* paragraphs [0073], [0073] *<br>* paragraph [0089] *<br>* paragraph [0048] *<br>* paragraph [0087] *<br>* paragraphs [0057], [0058], [0089] *<br>* paragraph [0056] *<br>* paragraph [0061] *<br>* paragraphs [0169] - [0174] *<br>* paragraph [0185] *<br>----- | 1-9,11,<br>12,15<br>13,14 | INV.<br>H01M4/62<br>C08G73/14<br>C08L77/00<br>H01M10/0525<br>C08G73/10<br>C08L79/08<br>C08G69/26<br>C08G69/32<br>C08G69/40<br>C08G69/42<br>H01M50/423 |
| X | KR 2024 0058536 A (HANSOL CHEMICAL CO LTD [KR]) 3 May 2024 (2024-05-03)<br>* paragraphs [0037], [0038] *<br>* paragraphs [0062], [0067] *<br>* paragraph [0049] *<br>* paragraphs [0042] - [0045] *<br>* paragraph [0048] *<br>* paragraph [0050] *<br>* paragraph [0056] *<br>* paragraphs [0145] - [0151] *<br>----- | 1-9,11,<br>12,15 | TECHNICAL FIELDS SEARCHED (IPC)<br>H01M<br>C08G |
| X | JP 5 358754 B1 (NISHIURA KATSUNORI ET AL) 4 December 2013 (2013-12-04)<br>* paragraphs [0011] - [0014] *<br>* paragraphs [0062], [0078] *<br>* paragraphs [0011], [0012], [0019] *<br>* paragraphs [0070] - [0073]; examples Reference 3, Reference 4, 3, 4 *<br>----- | 1,3-6,10 | |
| Y | US 2021/074994 A1 (ITO SHINICHIRO [JP] ET AL) 11 March 2021 (2021-03-11)<br>* paragraphs [0004] - [0008]; figures 3, 4 *<br>----- | 13,14 | |

The present search report has been drawn up for all claims

2

| Place of search | Date of completion of the search | Examiner |
|---|---|---|
| The Hague | 9 March 2026 | Martin, Andréa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 20 6987

This annex lists the patent family members relating to the patent documents cited in the above-mentioned European search report. The members are as contained in the European Patent Office EDP file on
The European Patent Office is in no way liable for these particulars which are merely given for the purpose of information.

09-03-2026

| Patent document cited in search report | Publication date | Patent family member(s) | Publication date |
|---|---|---|---|
| KR 20240066611 A | 16-05-2024 | CN 120153496 A | 13-06-2025 |
| | | EP 4618197 A1 | 17-09-2025 |
| | | JP 2025537699 A | 20-11-2025 |
| | | KR 20240066611 A | 16-05-2024 |
| | | WO 2024101868 A1 | 16-05-2024 |
| KR 20240058536 A | 03-05-2024 | CN 120112580 A | 06-06-2025 |
| | | EP 4610294 A1 | 03-09-2025 |
| | | KR 20240058536 A | 03-05-2024 |
| | | WO 2024091011 A1 | 02-05-2024 |
| JP 5358754 B1 | 04-12-2013 | JP 5358754 B1 | 04-12-2013 |
| | | JP WO2013132864 A1 | 30-07-2015 |
| | | TW 201343840 A | 01-11-2013 |
| | | WO 2013132864 A1 | 12-09-2013 |
| US 2021074994 A1 | 11-03-2021 | CN 112582621 A | 30-03-2021 |
| | | DE 102020211226 A1 | 11-03-2021 |
| | | JP 7161680 B2 | 27-10-2022 |
| | | JP 2021044162 A | 18-03-2021 |
| | | KR 20210031394 A | 19-03-2021 |
| | | US 2021074994 A1 | 11-03-2021 |
| | | US 2023378430 A1 | 23-11-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020160040125